# EUROPEAN PATENT APPLICATION

(11) **EP 2 110 548 A2**
(43) Date of publication of application: **21.10.2009**
(21) Application number: 09005469.3
(22) Date of filing: 17.04.2009
(51) Int. Cl.: F03D 3/06

(54) **Wind power engine with vertical axle and sail wings**

(30) Priority: 18.04.2008 IT TA20080005
(71) Applicant: Stoma Energy SRL, 74016 Massafra (TA) (IT)
(72) Inventor: Negri, Mario, 74100 Lido Azzurro (IT)

(57) **Abstract**

This project has been studied to produce power with a system that captures the wind with sail wings positioned around a rotor with a rotating vertical axle and with a weathervane (that orientate itself with the dirction of wind) that has a surface equal to a sail wing. The sail wings (with a minimum of 4 wings to a maximum of 6 wings) are fixed to a rotating support with an horizontal axle and with an eccentric bearing to the ends that permits the rotation of wings for 90° throught a cam inside the rotor that is controlled by the weathervane that orientates one part of wings in vertical position for 180° of rotor, always in favor of wind, and the restant wings positioned to 180° in horizontal to reduce the wind impact; all is make to exploit the maximum force of wind.

## Description

This project has been studied to produce electric power with a system that captures the wind with sail wings positioned around a rotating vertical shaft equipped with a weathervane for auto-guidance in the wind direction.
The sail wings (with a variable number from 4 to 6) are fixed in horizontal position on the rotating supports with a maximun rotation of 90°; this rotation is obtained throught a cam located inside the rotor and connected to the weathervane that permits to orientate the sail wings always in the direction of the wind.

The advantages of this system are several:
a) the rotation of sail wings on a vertical axle permits to use supports having different heights very small, with a minimum environmental impact;
b) the rotation on vertical axle permits to obtain a perfect centrifugal balance and in this way is possible to use supports having minimal dimensions;
c) a machine of medium dimensions (wings are long 10 meters and large 4 meters with a wind speed of 5 metres/second that develop a medium strenght on the rotating shaft of 40.000 Nm ( Newton meters);
d) this system does not require locking brakes when the wind is strong bacause the speed of wings is very small;
e) the auto-guidance of wings is made by the the weathervane that is oriented by itself in wind direction without engines, and in this way there is an energy saving;
f) the explotation of the wind's strenght on the wings is similar to a vertical wall;
g) the low speed of wings make possible to use them as billboards for advertising obtaining an economic saving.
   Composition of wind engine:
h) no. 1 rotor with vertical rotating axle complete of mechanisms for auto-guidance of the sail wings
i) from no. 4 to no. 6 sail wings positioned around an horizontal maxle on the rotor
j) from no. 4 to no. 6 sail wings positioned radially with dimensions in leght from 2 meters to 50 meters and in lageness from 0,5 meters to 10 meters
k) no. 1 weathervane mfixed to the rotor mechanism for the auto-guidance of sail wings
l) no. 1 rotor support fixed on the column (or lattice) complete of bearings on vertical axle for rotation of the rotor
m) no. 1 column (or lattice) with appropriate dimensions for the support of wind engine and for the ventilated area.

Is claimed the composition of wind engine as follows:

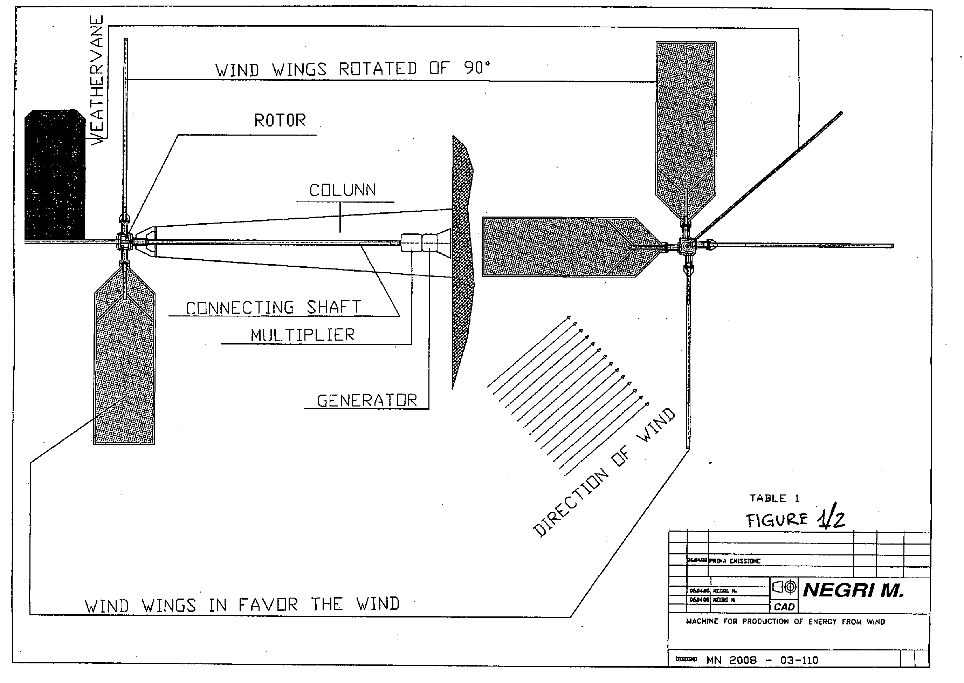

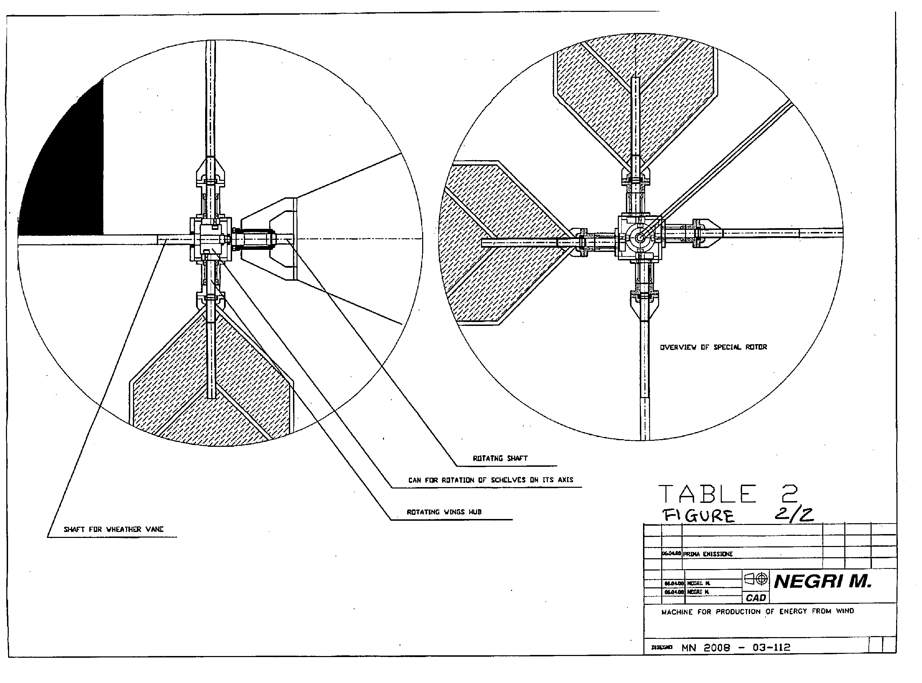

## Claims

1. no. 1 rotor with vertical axle complete of mechanisms for the auto-guidance of sail wings

2. from no. 4 to no. 6 sail wings positioned radially on the rotor with horizontal axle

3. from no.4 to no. 6 sail wings positioned radially with dimensions in length from 2 meters to 50 meters and in largeness from 0,5 meters to 10 meters

4. no. 1 weathervane fixed on the rotor mechanism for the auto-guidance of the sail wings

5. no. 1 rotor support fixed on column ( or lattice) complete of bearings on vertical axle for the rotation of rotor

6. no. 1 column (or lettice) with appropriate dimensions for the support of wind engine and for the ventilated area.
